**Europäisches Patentamt**

(19) **European Patent Office**

**Office européen des brevets**

(11) Publication number : **0 376 375 B1**

## (12) EUROPEAN PATENT SPECIFICATION

(45) Date of publication of patent specification :
**15.03.95 Bulletin 95/11**

(51) Int. Cl.[6] : **G11B 11/10**

(21) Application number : **89203214.5**

(22) Date of filing : **18.12.89**

(54) **Method of thermomagnetic recording of information and optical read-out of the stored information, and also a recording element suitable for use in this method.**

(30) Priority : **24.12.88 NL 8803168**

(43) Date of publication of application :
**04.07.90 Bulletin 90/27**

(45) Publication of the grant of the patent :
**15.03.95 Bulletin 95/11**

(84) Designated Contracting States :
**AT BE CH DE ES FR GB IT LI LU NL SE**

(56) References cited :
**EP-A- 0 304 873**
**EP-A- 0 367 685**
**PATENT ABSTRACTS OF JAPAN vol. 12, no. 417 (P-782)(3264) 07 November 1988, & JP-A-63 153749 (FUJITSU LTD.) 27 June 1988,**
**PATENT ABSTRACTS OF JAPAN vol. 12, no. 129 (P-692)(2976) 21 April 1988, & JP-A-62 252546 (FUJI PHOTO FILM CO., LTD.) 04 November 1987,**

(73) Proprietor : **Philips Electronics N.V.**
**Groenewoudseweg 1**
**NL-5621 BA Eindhoven (NL)**
Proprietor : **E.I. DU PONT DE NEMOURS AND COMPANY**
**1007 Market Street**
**Wilmington Delaware 19898 (US)**

(72) Inventor : **Greidanus, Franciscus Johannes Antonius Maria**
**c/o INT. OCTROOIBUREAU B.V.**
**Prof. Holstlaan 6**
**NL-5656 AA Eindhoven (NL)**
Inventor : **Carcia, Peter Francis**
**c/o INT. OCTROOIBUREAU B.V.**
**Prof. Holstlaan 6**
**NL-5656 AA Eindhoven (NL)**
Inventor : **Zeper, Wouter Bastiaan**
**c/o INT. OCTROOIBUREAU B.V.**
**Prof. Holstlaan 6**
**NL-5656 AA Eindhoven (NL)**
Inventor : **den Broeder, Friedrich Johannes Ary**
**c/o INT. OCTROOIBUREAU B.V.**
**Prof. Holstlaan 6**
**NL-5656 AA Eindhoven (NL)**
Inventor : **Godlieb, Willem Frederik**
**c/o INT. OCTROOIBUREAU B.V.**
**Prof. Holstlaan 6**
**NL-5656 AA Eindhoven (NL)**

(74) Representative : **Weening, Cornelis et al**
**INTERNATIONAAL OCTROOIBUREAU B.V.,**
**Prof. Holstlaan 6**
**NL-5656 AA Eindhoven (NL)**

## Description

I. This invention relates to a method of thermomagnetic recording of information and optical read-out of the stored information, as well as a recording element suitable for use in this method.

II.Detailed description of the invention.

### a) Field of industrial application.

Thermomagnetic recording of information and optically readable recording elements used therein.

### b) Prior art.

Thermomagnetic recording of information is a recording method which is known per se and is disclosed in, for example, Philips Techn. Rev. 42 , No. 2, pp. 51-58 (1985). In this method a recording element is used which has a substrate and a recording layer provided thereon. In the thermomagnetic recording of information, the thermomagnetic recording element is exposed to laser light originating from, for example, an AlGaAs layer having a wavelength of approximately 820 nm The laser light beam is focussed onto the recording layer by means of a lens system. The thermomagnetic recording layer includes a magnetic recording material having a perpendicular anisotropy in which the easy axis of magnetization is perpendicular to the layer surface. In the locations exposed to the laser light beam the temperature of the magnetic material increases and subsequently the direction of magnetization of the heated area is reversed. This reverse can take place spontaneously in response to interaction with the magnetic field of the adjacent magnetic material. Preferably, the direction of magnetization is reversed by means of an external magnetic field whose field direction is opposite to the direction of magnetization of the recording layer. After exposure the magnetic material cools and the changed direction of magnetization is fixed. The areas having the opposite direction of magnetization are representative of the recorded information. This information can be read with the aid of polarized laser light, on the basis of a rotation of the polarisation plane. This rotation is known as the Kerr-effect in the case of reflection and as the Faraday effect in the case of transmission of polarised light.

So far two classes of magnetic materials in which thermomagnetic recording of information is possible are known. It should be noted that many magnetic materials are known which evidence said perpendicular anisotropy. However, only a few of these magnetic materials, belonging to said two classes, were found to be suitable for thermomagnetic recording.

This is not very surprising since for thermomagnetic recording the material must satisfy very severe requirements. In addition, these requirements are often opposite natures, that is to say that satisfying one required property means that satisfying the other required property is more difficult. The various requirements the thermomagnetic recording material is to satisfy is that the material

a) has a perpendicular magnetic anisotropy

b) has a rectangular BH curve (i.e. a remanence of 100%) with a high coercive force at ambient temperature. The $H_c$-value of the thermomagnetic recording material must be larger than the writing field, i.e. larger than 40 kA/m,

c) has a high magneto-optical figure of merit, $R\theta^2$, wherein R represents the reflectivity and $\theta$ the rotation of the polarization plane of light on interaction with the recording material,

d) has a relatively low Curie point $T_c$,

e) has a good switching characteristic. As a result thereof, switching can be effected at different powers of the write laser and at minimal strength of the (external) magnetic field used, which strengths are preferably less than 40 kA/m,

f) has a low disc noise and write noise,

g) must be properly workable at low temperature, and

h) must have an appropriate physical and chemical stability.

The two classes of materials which reasonably satisfy said requirements are:

1. the class of amorphous rare earth material and transition metal alloys such as those described in inter alia Appl. Phys. Lett. 22 337 (1987).

Well-known and properly efficient materials of this class are, for example, GdTbFe or TbFeCo.

2. the class of the oxidic compounds. In this class a further distinction can be made between (mono)crystalline garnets and ferrites. The thermomagnetic recording with the aid of monocrystalline garnet layers is disclosed in, inter alia ,J. Appl. Phys. 36 1110 (1965). The use of ferrites is described in the United States Patent US 4,586,092.

c) Problems to be solved.

The use of the prior-art thermomagnetic recording materials of the classes mentioned above has the following disadvantages.

The ferrites have the drawback that the noise introduced by this material is relatively high. This causes a low signal-to-noise ratio (CNR), so that these materials are not so suitable for the recording of, for example, video (image) signals. A further drawback is that the ferrite layers must be processed into a recording layer at an elevated temperature. Thus, these materials are deposited on a substrate by, for example, sputter deposition 400-500°C. This means that the substrate must be capable of withstanding such high temperatures. It is therefore not very well possible to use a synthetic resin substrate or a substrate coated with a synthetic material layer. But it is precisely the use of a synthetic resin substrate or a substrate coated with a synthetic resin layer which is of great practical importance. It is, namely, possible to form a guide track, for example in the shape of a helical groove, in a simple and cheap manner in such a synthetic resin. By means of the guide track the laser light beam at the writing or reading process can be guided and controlled.

The (mono)crystalline, rare earth metal containing garnets have the disadvantage that their production is very expensive. In practice, monocrystalline layers of this type are not or only little suitable for thermomagnetic recording and actually are only suitable for special, professional applications. The substrate onto which such a monocrystalline layer is provided must be a non-magnetical, monocrystalline garnet material. Also in this case there is the above-mentioned drawback, namely that the use of substrates containing a synthetic resin material is excluded. In addition, these materials have the disadvantage that they have a very high transmission, so that the coupling-in of the write laser light, i.e. the energy transfer, is very low.

The thermomagnetic recording layers on the basis of GdTbFe or TbFeCo which upto now have proved to be the most promising layers, have the important disadvantage of a strong corrosion (oxidation) sensitivity. As a result thereof the layers are no longer suitable for recording after a short period of time and, in additon, the information already stored is lost. To obviate this drawback it has been proposed to use protective layers. However, this obviates the corrosion problem only partly. Moreover, this additionally complicates the structure of the recording element which consequently becomes more expensive.

A further disadvantage of the use of rare earth metal and transition metal alloys in the thermomagnetic recording of information is the magnitude of the magneto-optical effect of this material. Magneto-optical effect must here be understood to mean the rotation of the polarization plane of the polarized laser light used on read-out. As will be described in detail hereinafter, the magnitude of this effect plays an essential role during the read-out of thermomagnetically recorded information. It has been found that the magnitude of this effect unfortunately reduces at shorter wavelengths of the read laser light, more specifically for wavelengths shorter than the read wavelength of 820 nm which at present is the mostly used read wavelength. Now, when shortwave laser light could be used, for example produced by what is commonly denoted a blue laser, then writing and/or reading could be effected with a higher information density.

d) Means for solving the problems.

The invention provides a recording element for thermomagnetic recording of information and the optical read-out of the stored information, which does not have the disadvantages and problems described sub c).

The invention relates more specifically to a recording element as set out in claim 1. The multi-layer locally is exposed to a laser beam so that in these locations the temperature of the multi-layer is increased, the direction of magnetization of the exposed locations is reversed and the locations with the reversed magnetization which constitute the information bits are read out by polarized laser light on the basis of the rotation of the polarization plane.

e) Mode of operation of the invention.

The recording element used in the method of the invention has a recording layer which is of a new type for thermomagnetic recording. As will be described in greater detail hereinafter, the class of multi-layer materials used here has a number of properties which are comparable to or considerably better than those of the prior art recording layers, which are based on the two known, above-defined classes of thermomagnetic recording materials. It should be noted that "predominantly containing Co" is to be understood that the magnetic layers have at least 90 at.% of Co. It is noted however, that some interdiffusion of the Co and the non-magnetic transition elements can occur at the boundaries of the magnetic layers and the non-magnetic layers. In that case, a lower amount of Co can be found in the magnetic layers, especially when the Co-layers are thinner than 0.6 nm. It should also be noted that "transition elements" are here to be understood to be elements from the columns VIII and I-B of the periodical system having an atomic number exceeding 44, such as more specifically Pt, Pd, Au, Rh and Ir.

The recording layer in the form of a multy-layer, used in the thermomagnetic recording method of the invention, is chemically and physically very stable. In particular, no corrosion problems occur with this recording multi-layer, so that the recording elements are usable for a long period of time and the thermomagnetically stored information does not get lost. Repeated write tests have demonstrated that the direction of magnetization of the magnetic domains of the recording material can be changed at least a thousand times without chemical and/or structural changes being observable in the recording multi-layer.

The magneto-optical effet of the thermomagnetic recording layers used in accordance with the invention, is sufficiently high so that a high signal-to-noise ratio of, for example, 50 dB or more can be achieved at a bandwidth of 30 kHz, a carrier of 1 MHz and a linear velocity of 5 m/s. Especially multilayers containing Pt and/or Pd as non-magnetic layers show such high values of the signal-to-noise ratio. With relatively short wavelengths of the read laser light this effect surprisingly increases still more and this effect is even considerably greater than the magneto-optical effect of the prior-art recording materials on the basis of GdTbFe. Measurements at 400 nm on a multi-layer formed by 0.5 nm thick Co-layers and 0.9 nm thick Pt-layers proved that this effect is approximately twice as high as with a GdTbFe recording material.

The Curie point ($T_c$) of the recording elements used in the method of the invention is low, namely below 700 K. This is surprising since Co and the non-magnetic materials exist as separate layers. Thus one might have expected a rather high $T_c$, characteristic of Co-metal. The comparatively low $T_c$ is very advantageous for the thermomagnetic writing process, since in this process the multi-layer is locally heated to near its $T_c$ followed by a reversal of the direction of magnetization in these locations. For magnetic multi-layer having such a low $T_c$ it was found in repeated write tests (1000 times) that the structure and the composition of the multi-layers is not or is hardly influenced by a temperature increase upto the $T_c$.

The recording element used in the method according to the invention has in addition a high magneto-optical figure of merit, which is determined by the product $R.\theta^2$, wherein R is the reflectivity and $\theta$ the Kerr-rotation of the multi-layer. The high value of the figure of merit provides a good impression of the advantageous use of the multi-layer of the present case for thermomagnetic recording. The value of the figure of merit is proportional to the signal-to-noise ratio achievable on read-out. An obtained high signal-to-noise ratio of, for example, 55 dB and higher enables the storage and read-out of video information.

The coercive force at ambient temperature of the multi-layer used is relatively high, namely not less than 35 kA/m, and preferably not less than 80 kA/m. These high values of the coercive force ensure that the thermomagnetic domains have an adequate stability at ambient temperature.

In addition, the recording element used has a perpendicular anisotropy. In experiments leading to the invention it was demonstrated that this is only the case if the thickness of the separate Co-layers is less than approximately 1.2 nm.

It has further been found that the thickness of the recording layer of the recording element is of great importance. The overall thickness of the multy-layer must be less than 75 nm. It has been demonstrated that at a larger thickness a relatively fast heat dissipation in the multi-layer occurs during the thermomagnetic write procedure. Moreover, the heat capacity of a thin multilayer increases with increasing thickness. Consequently, the laser energy required for the writing operation becomes relatively high, which is a drawback for practical applications.

The domains (or bits) written thermomagnetically in accordance with the method of the invention in the recording element are of a perfect shape. This is of great importance, as irregularities in the written domains produce the so-called write noise. It has been found that this type of noise gives generally an important contribution to the total noise. Because of the perfect shape of the domains (bits) the measured write noise of the recording element used is very low. It has been demonstrated that this write noise is less than the disc noise.

In this connection it should be noted that writing the domains can be effected in different manners. In accordance with a first method, the recording element is held in a constant magnetic field which is directed oppositely to the direction of magnetization of the recording layer of the element. The information can be written-in by exposure of the recording layer to modulated laser light, the direction of magnetization being reversed in the exposed locations (laser modulation technique). In accordance with a second method an area of the recording layer of the element is exposed to a continuous laser light beam. In this heated region, with the aid of an external magnetic field which is modulated in conformity with the information to be stored, information bits with an opposite magnetization are written-in. The field direction is varied at a high velocity. This is denoted the field modulation technique. Both methods can be successfully applied in the method according to the invention. Generally, the field modulation technique has the advantage that information already present can directly be written-over, without the necessity of first erasing the recording layer. In addition, a further method can be used in which both the write laser and the magnetic field are modulated.

In an advantageous embodiment of the method according to the invention, a recording element is used whose non-magnetic layers predominantly consist of Pt. Predominantly must here be understood to mean that these layers have a minimum of 90 at.% Pt. It has been found that because of the particularly high insensitivity to oxidation of such a recording element the stored information bits remain intact for a very long period of time. The elements which are least sensitive to oxidation are obtained by using non-magnetic layers which fully consist of Pt.

In another advantageous embodiment of the method according to the invention, a recording element is used whose non-magnetic layers predominantly consist of Au. Predominantly must here be understood to mean that these layers have a minimum of 90 at.% Au. The corrosion resistance of such a recording element is excellent.

In another advantageous embodiment of the method according to the invention, a recording element is used whose non-magnetic layers predominantly consist of Pd. Predominantly must here be understood to mean that these layers have a minimum of 90 at.% Pd. Apart from the excellent corrosion resistance such a recording element shows a high coercive force.

In another advantageous embodiment of the method according to the invention, a recording element is used whose Co-containing magnetic layers have a maximum thickness of 0.6 nm. It has been found that if such a recording element is used, the recording layer has a remanence of 100% ($M_r/M_s=1$). This is of specific importance to provide an optimum switching characteristic.

In accordance with a further preferred embodiment a recording element is used whose multi-layer has an overall thickness of not more than 40 nm. It has been demonstrated that this thickness approximately corresponds to the penetration depth of the laser light used (laser energy ~15 mW).

In another interesting embodiment of the recording element used in the method of the invention, the total thickness M of the magnetic layers and the total thickness N of the non-magnetic layers are defined by the formula $1<N/M<5$. Calculations and experiments resulting in the present invention have shown that very good write and read properties are obtained in the method according to the invention when the thicknesses of the magnetic and the non-magnetic layers of the multi-layer are chosen such that they satisfy this condition. It has been found in particular that if N/M is chosen to be less than 1, the remanence of the recording layer is relatively low. If N/M is chosen to be higher than 5, the Kerr-rotation appears to be relatively small.

A further interesting embodiment is characterized, in that a recording element is used in which the thickness of the individual Co-containing layers amounts to 0.3-0.5 nm, and the thickness of the individual Pt- or Pd-containing layers amounts to 0.8-1.2 nm. In this embodiment a high Kerr rotation is obtained in combination with a high remanence.

The invention also relates to a recording element suitable for use in the method according to the invention. More specifically, the invention relates to a recording element having a substrate, and a recording layer applied thereon in the form of a multi-layer, which comprises a plurality of magnetic, predominantly Co-containing layers with a maximum thickness of 1.2 nm per layer, and also a plurality of non-magnetic layers, which each include at least one transition element and have a maximum thickness of 2.4 nm per layer, the magnetic and the non-magnetic layers are situated alternately, wherein the maximum thickness of the multi-layer is not more than 75 nm and in which the multi-layer has an easy axis of magnetization which is perpendicular to the substrate surface.

It should be noted that the European Patent Application EP-A 241.080 discloses a magnetic recording element having a multi-layer of alternately applied Co-layers and Pd-layers. Information is written therein magnetically, so by using a magnetic head, the direction of magnetization being locally reversed under the influence of the magnetic field of the magnetic head. The overall thickness of the multi-layers described in said Patent Application exceeds 190 nm.

In the recording element according to the invention the information is preferably written and read via the substrate. In that case the substrate must be transparent to the laser beam used. In this form of recording and reading it is achieved that any dust particles or any other contaminations on the surface of the substrate do not negatively affect the write or read quality, as they are outside the depth of focus of the objective by means of which the light beam is focussed onto the recording layer. The transparent substrate is made of, for example, glass, quartz or a transparent synthetic material, such as, for example, polycarbonate or polymethyl methacrylate.

At the side facing the recording layer the surface of the substrate is preferably provided with an optically scannable guide track, in the form of, for example, a groove which usually is of helical or a circular shape. This groove may partly be provided with optically readable information bits, which control, for example, the write and read procedure. The optically readable bits are alternately located at a higher and a lower level, which causes the track thus obtained to have a crenelated shape. The information bits are read in reflection on the basis of phase differences in the reflected light. Magneto-optical recording can be effected in both the groove and at the dike portions located between the groove turns.

When a glass substrate is used, the track is preferably made in a separate synthetic resin material layer provided on the substrate and consisting of, for example, light-cured acrylic esters. The recording layer is then applied on top of this layer.

The recording layer may further be covered by a protection coating, for example a layer consisting of a light-cured lacquer, made of, for example, acrylic esters. An interesting feature is the possibility to glue or cement two recording elements of the invention to each other, the recording layers of the two elements then facing each other.

In an interesting embodiment of the recording element according to the invention a dielectric layer is situated between the recording layer and the substrate.

The dielectric layer contains, for example, an inorganic oxide, nitride, selenide, etc. Examples of suitable layers are layers made of $Si_3N_4$, AlN, SiO, $SiO_2$, ZnO, $Zn_3n_2$, $ZnSi_3N_2$, ZnSe, $ZrO_2$, $TiO_2$, and $AlZrN_2$. The use of such a layer results in a higher figure of merit.

It should be noted that in the prior-art thermomagnetic recording elements in which, for example, GdTbFe is used, the choice of the dielectric layer is limited to oxygen-free materials in view of the sensitivity to oxidation. This does not hold for the thermomagnetic recording element in accordance with the invention.

A further recording element in accordance with the invention which can be used with great advantage, is characterized, in that a reflection layer is present at that side of the recording layer remote from the substrate. Such an element can only be written in and be read _via_ the substrate. On reading, the read laser beam passes the recording layer twice. Compared with a recording element without reflection layer, an element with a reflection layer has the particular advantage that the Kerr rotation of the detected read-out beam is under certain circumstances significantly increased. This effect strongly depends on the material of the reflection layer and the thickness of the multilayer. For instance, the application of a reflection layer of Al on a 40-50 nm thick recording layer provides an important increase in the signal-to-noise ratio. The reflection layer is usually constitued by a vapour-deposited or sputtered metal mirror. Suitable metals for this mirror are Al, Au, Ag, Pt, Cu and Ti.

In a further advantageous embodiment of the recording element in accordance with the invention, a dielectric layer is provided between the recording layer and the reflection layer. This dielectric layer preferably contains the same material as the dielectric layer described in the foregoing, which is applied between the substrate and the recording layer. The use of this dielectric layer has the advantage that the figure of merit of the recording element is still further improved thereby and consequently a still better signal-to-noise ratio can be realized. Applying such a second dielectric layer is only advantageous for thin recording layers, for example thinner than 40 nm. Preferably, the recording layer then has a thickness of 10-25 nm.

A still further interesting embodiment is the embodiment of the recording element according to the invention in which the recording element contains at least two recording layers each formed by a multi-layer, the recording layers being magnetically non-coupled and the recording layers being mutually separated by a spacer layer and in which the thickness of at least one of the recording layers is less than 40 nm. In practice it has been found that the recording layer can be very thin, the thermomagnetic and magneto-optical properties remaining adequate. Such thin layers are necessary in multi-layer systems, because the layer or layers in a more exterior position must be written or read _via_ the layer or layers located more inwardly. Consequently, the layer or layers in a more interior position must still have some degree of transparency relative to the laser light used so as to reach the more exteriorly located layer. For this reason the more interiorly located layers must be thinner than 40 nm, more specifically preferably 10-30 nm thick. In this connection it should be noted that with the prior-art thermomagnetic recording materials on the basis of alloys of amorphous rare earth metal and transition metal a multi-layer recording element is not possible. The sensitivity to oxidation of this known material is so high that thin layers do not have an adequate lifetime.

A particularly advantageous case is that in which the spacer layer contains an organic polymer, preferably a photopolymerized lacquer, for example on the basis of acrylic esters.

Of special importance is also the embodiment of the recording element in which the multi-layer recording layer is composed of a write sector and a parallel extending read sector both having a plurality of magnetic and non-magnetic layers, the thickness (M) of the individual magnetic layers and the thickness (N) of individual non-magnetic layers being chosen such that it holds that: (N/M) read sector <(N/M) write sector. The use of multi-layer recording layers in recording elements renders it possible to separate the read function and the recording function in the recording layer in a simple manner and to optimize them separately. This is realized by increasing the Kerr rotation in the sector of the multi-layer where the read procedure is mainly effected (read sector). Such increase is achieved by increasing the relative thickness of the magnetic layers in this sector. In the other sector, in which the thermomagnetic write procedure is mainly effected (write sector), the thickness of the individual magnetic and non-magnetic layers must be chosen such that the properties of the multi-layer there are optimally suitable for thermomagnetic recording. In practice it has been found that this implies that the Co-content of the read sector exceeds the Co-content of the write-sector.

It preferably holds for such a recording element that the overall thickness of the read sector and the overall thickness of the recording sector are in a ratio of 1 : 3. It further holds that it is advantageous for such a recording element to have the characterizing feature that (N/M) read sector = 3/2 and that (N/M) recording sector = 9/4.

Interesting is also an embodiment of a recording element in which the non-magnetic layers of the read-sector contain essentially Pt and in which the non-magnetic layers of the write sector contain essentially Pd. This embodiment allows a further optimization of the recording requirements and the read-out requirements within a single recording multilayer.

The multi-layer used in the recording element can be obtained in known manner by means of physical vapour deposition of the individual magnetic and non-magnetic layers. It has been found that depositon by means of vacuum vapour deposition, f.i. e-beam evaporation, has the advantage that the deposited multilayers show higher $H_c$-values than those obtained by sputtering. This holds particularly for Co-Pt multilayers. It is supposed that with evaporation metal layers are obtained with sharper transistions between the different metal layers than obtained by sputtering, because of the lower kinetic energy of the metal atoms impinging upon the surface, leading to less interdiffusion of the metal atoms.

The thickness of the layers can be realized in a manner known per se by influencing the temperature of the metal sources and/or the deposition time of the individual elements.

An interesting element is also a recording element having a magnetic recording layer constituted by a multi-layer which is magnetically exchange-coupled to a second magnetic recording layer of the element. The second recording layer may also be formed by a multi-layer, or consist of a known recording material, for example on the basis of GdTbFe or TbCoFe. As is described in inter alia the European Patent Application No. 258.978, recording elements of that type offer interesting possibilities for use in thermomagnetic recording methods of the type known as "direct overwrite". The use of at least one multi-layer in this record method has the advantage that the total layer thickness can be very limited, so that the write leaser energy required is small. In addition, exchange-coupled thin layers, having, for example a thickness less than 30 nm, but preferably less than 20 nm, have the advantage that this coupling occurs much more efficiently than with thicker layers.

Magneto-optical recording media demonstrating perpendicular magnetic anisotropy and comprising layers of Co alternately stacked in a multi-layer arrangement with layers of non-magnetic material are discussed in European Patent Applications EP-A-0304873 and EP-A-0367685, which are both prior art documents in the sense of Article 54(3) and (4) EPC. Both of these documents disclose Pd as a suitable non-magnetic material, and the former document additionally discloses Pt in this context. However, no mention is made of Co/Au structures, and neither document suggests the use of an optically scannable guide track in conjunction with the discussed multi-layers.

Another multi-layer magneto-optical recording medium is elucidated in JP-A-63-153749. This medium comprises alternately stacked layers of magnetic material (such as Fe, Co or Ni) and non-magnetic material (such as Ag, Mg, SiO, $Si_3N_4$ or ZnS). However, the disclosed medium does not demonstrate perpendicular magnetic anisotropy.

f) Embodiments:

The invention will now be described in greater detail with reference to the embodiments shown in the accompanying drawing.

1. Producing a thermomagnetic recording element.

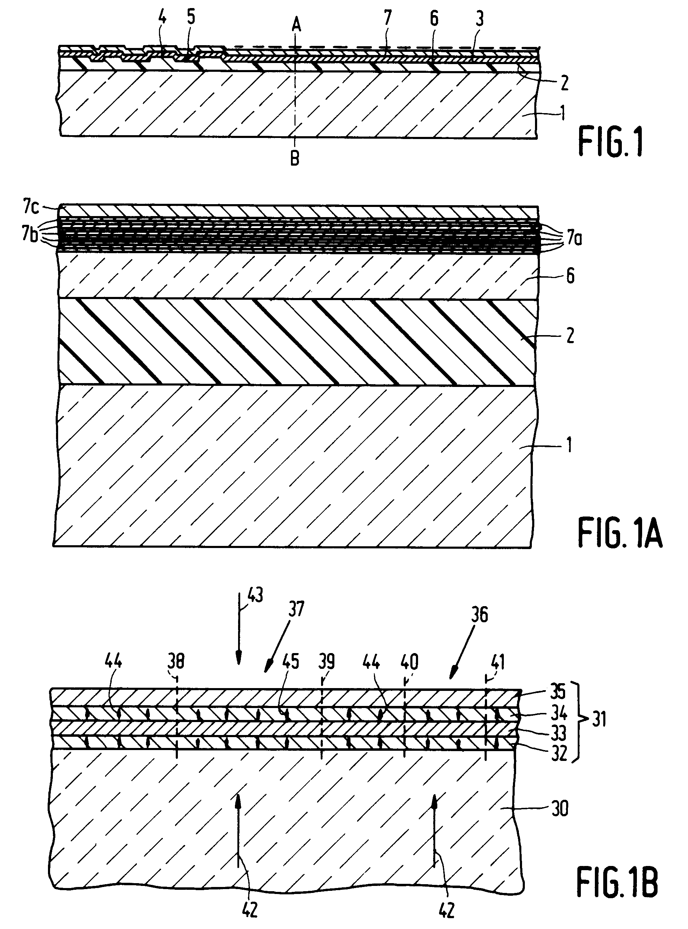

A glass substrate (1) having a diameter of 5 inch (see Fig. 1) was coated with a layer (2) of a photopolymerizable lacquer on the basis of acrylates. The uncured lacquer was applied between the substrate and the matrix. The surface of the matrix was provided with a negative of the desired guide track. The lacquer was cured by exposing it to UV-light through the substrate. Thereafter the matrix was removed. In this manner a guide track in the form of a groove (3) was made. The track is provided with control information constituted by optically readable information bits which are alternately located at a higher level(4) and a lower level (5). The bits are read in reflection with the aid of a weak laser light beam, not shown, on the basis of phase differences in the reflected light originating from a bit at a higher level and a lower level. Layer (2) was coated by a sputtering method with a dielecric layer (6) consisting of AlN having a thickness of 80 nm. A magneto-optical layer (7) in the form of a multi-layer (see Fig. 1A) was vapour deposited on top of the dielectric layer. For that purpose the substrate (1) provided with layers (2) and (6) was placed in a belljar, which was thereafter evacuated to a pressure of $4.10^{-8}$ mbar. Co-layers having a thickness of 0.24 nm and Pt-layers having a thick-

7

ness of 1.74 nm were successively e-beam evaporation deposited. The layers are shown in Fig. 1A, the Co-layers being denoted by 7a and the Pt-layers by 7b. During the deposition of the Co and the Pt the presssure was kept at $5.10^{-7}$ mbar. The deposition rates of the Pt and Co-metal sources was kept constant at a rate between 0.1-0.2 nm/s with the aid of quartz oscillators. The metal vapour flows were controlled by shutters. The overall thickness of the multi-layer was approximately 50 nm. The total number of Pt and Co-layers was 50 in this case. For the sake of clarity, only 10 layers are shown in Fig. 1A. In a number of cases a reflection layer 7c of metal, for example Al, Ag, Au, Ti, Cu or Pt having a thickness of 30 nm was evaporated on the recording layer, thus forming together with the multi-layer 79, 76 and the dielectric layer 6 a "tri-layer" structure. In some cases a second dielectric layer, not shown in Fig. 1 and 1A was applied between the multi-layer and the reflection layer, so as to achieve a "quadri-layer" structure.

## 2. Arrangement for performing the method according to the invention.

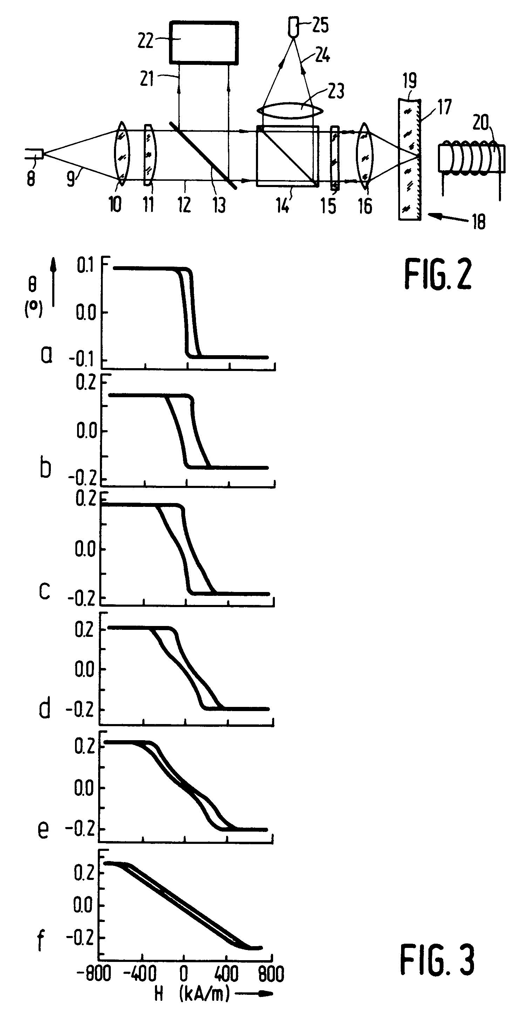

Fig. 2 shows an arrangement for thermomagnetically recording and optically reading information in which the above-desscribed recording element is used.

In the Figure, reference numeral 8 denotes an AlGaAs laser which produces a pulsed light beam 9 having a wavelength of 820 nm. The light beam is pulsed (modulated) in accordance with the information to be recorded. The light beam 9 passes through an objective 10 having a numerical aperture (NA) of 0.3. The astigmatism of the laser beam is corrected by passing it through a cylindrical lens 11. The parallel beam 12 thereafter passes through a partially transparent mirror 13 and a polarization splitter-cube 14 which transmits the parallel polarization component of the laser light, whilst the perpendicular component is reflected. The transmitted, linearly polarized light passes a Faraday rotator 15 which shifts the polarization direction through a small angle. Thereafter the linearly polarized light is focussed by means of an objective 16 having a numerical aperture (NA) of 0.6 onto the recording layer 17 of the magneto-optical recording element 18. This recording element is identical to the element shown in the Figs. 1 and 1A. Thus, the recording layer 17 is a multi-layer formed by alternately stacked Co and Pt-layers, provided on a glass substrate 19. Exposure to light of the recording layer is effected _via_ said substrate 19. In the exposed places a temperature increase to approximately the Curie point is effected by light absorption. By means of a magnetic field having a force of $2 \times 10^4$ A/m generated by coil 20 the magnetization direction of the recording layer is rotated in an exposed place through 180°, thus forming an information bit with a reversed direction of magnetization.

The recording of information is further illustrated in Fig. 1B. In this Figure, reference numeral 30 denotes a dielectric layer, applied on a glass substrate (not shown). Layer 30 is provided with a multi-layer 31. For the sake of clarity, only four sub-layers of multi-layer 31 are shown. Consequently, layer 30 is provided with a vapour-deposited layer of Co (32), Pt (33), Co (34) and Pt (35). The multi-layer 31 is exposed to modulated laser light _via_ the layer 30, as is shown by means of the arrows 42. In an exposed spot 37 located between the broken line boundary faces 38, 39 the temperature of the multi-layer increases to the Curie point (approximately 700 K). This also occurs in the exposed spot 36, between the boundary facses 40 and 41. The direction of magnetization of the multi-layer is denoted by arrows 44 in the magnetic Co-layers 32 and 34. An external magnetic field whose direction is indicated by arrow 43 and whose magnitude is $2.10^4$ A/m is applied across the plate. In the exposed spots 36 and 37 the direction of magnetization is reversed in response to the magnetic field 43. This is denoted by arrows 45 in the magnetic Co-layers 32 and 34.

Reading the stored information is further illustrated with reference to Fig. 2. A continuous light beam, weak in energy, coming from the AlGaAs laser 8 travels along the same light path as described in the foregoing for the write beam 9, 12. On reflection of the linearly polarized light beam against an information bit of the recording layer 17, the polarization plane is rotated through an angle $\theta_k$ (Kerr rotation) in response to the locally changed magnetization direction. The reflected read light beam again passes through objective 16, the Faraday rotator 15 and then arrives at the polarization splitter cubes 14 wherein the parallel component is transmitted. After reflection from the partially transparent mirror 13 the parallel component 21 is applied to the control arrangement 22 for positioning and focussing of the laser llight beam onto the recording layer 17 in the writing process. The perpendicular light component 24 of the read beam is reflected by the polarization splitter cube. _Via_ an objective 23 the perpencidular component 24 is focussed onto and collected in a detector 25, constituted by, for example, an avalanche photodiode, so as to detect the Kerr rotation.

## 3. Measurements on the magneto-optical recording element.

a Table I shows results of optical and magnetical measurements on six recording elements. The column 1 denoted by R shows the test reference number. Column 2 shows the number L of bilayers each consisting of one magnetical and a non-magnetical layer, of the multi-layer. Column 3 shows the thickness t (nm) of the individual Co and Pt layers. Column 4 shows the Kerr rotation ($\theta_k$) at 820 nm of the multi-layer. Column 5 shows the anisotropy energy $K_{eff (kJ)}$ per unit of volume Co. Column 6 shows the remanence ($M_r/M_s$) expressed as a percentage, and column 7 shows the coercive force $H_c$ (kA/m). This Table clearly shows that the perpendicular anisotropy in the multi-layer is obtained when the thickness of the individual Co-layers is less than approximately 1.2 nm. Only then $K_{eff}$ is positive. In addition it is shown that a 100% remanence is obtained if the thickness of the individual Co-layers is less than approximately 0.6 nm.

## Table I

| R | L | tCo | tPt | $\theta k$ | Keff | Mr/Ms | Hc |
|---|---|---|---|---|---|---|---|
| 1 | 25 | 0.24 | 1.74 | -0.06 | 1074 | 100 | 44 |
| 2 | 22 | 0.45 | 1.77 | -0.10 | 865 | 100 | 78 |
| 3 | 20 | 0.70 | 1.72 | -0.12 | 475 | 40 | 52 |
| 4 | 19 | 0.92 | 1.74 | -0.14 | 287 | 13 | 33 |
| 5 | 17 | 1.42 | 1.72 | -0.18 | -101 | 6 | 25 |
| 6 | 14 | 2.02 | 1.77 | -0.25 | -271 | 5 | 25 |

b Fig. 3 shows magneto-optical hysteresis loops of the embodiments listed in Table I in which the Kerr rotation is shown as a function of the applied field H. The loops a-f are measured at the respective test specimen 1-6. From the Figure it can also be derived that 100% remanence is obtained if the thickness of the individual Co-layers is less than approximately 0.6 nm.

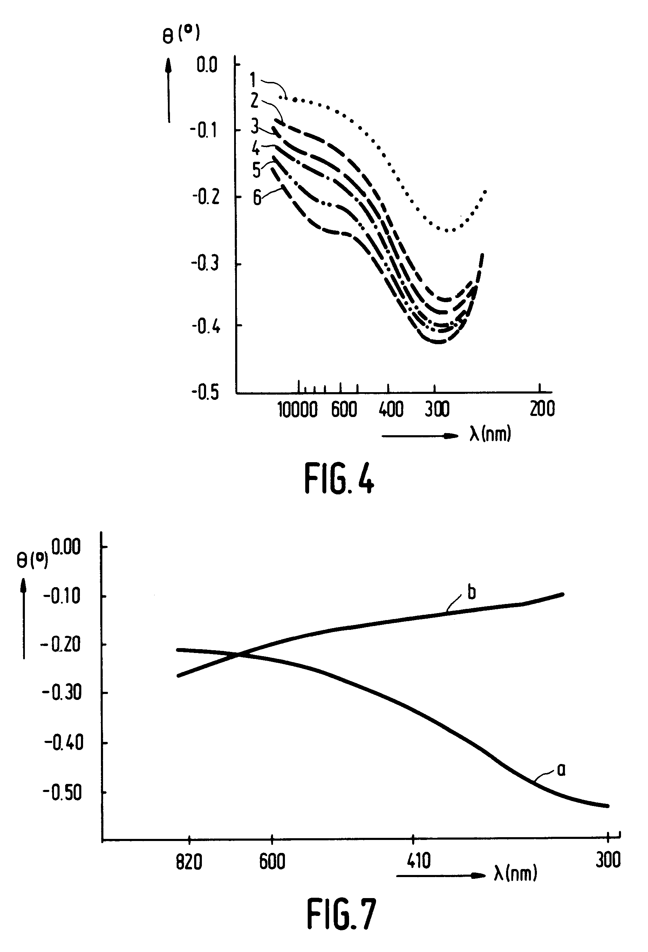

c Fig. 4 shows the curves of the polar Kerr rotation $\theta(°)$ as a function of the wavelength $\lambda$ (nm) of the examples listed in Table I. This Figure clearly shows that the polar Kerr rotation of the multi-layers increases when laser light with a relatively short wavelength is used. This indicates that the read-out of the multi-layers according to the present invention increases in the so-called blue-region of the spectrum, which makes the present multilayer especially interesting in combination with the so-called blue-laser.

d Table II shows a number of optical and magnetic properties of further multi-layers for use in a magneto-optical recording element. Also this Table shows that 100% remanence is obtained if the thickness of the Co-layers is less than 0.6 nm.

Table II

| R | L | tCo | tPt | θk | Mr/Ms | Hc |
|---|---|-----|-----|-----|-------|-----|
| 7 | 35 | 0.31 | 1.30 | -0.10 | 100 | 88 |
| 8 | 30 | 0.30 | 1.55 | -0.08 | 100 | 100 |
| 9 | 30 | 0.31 | 1.74 | -0.07 | 100 | 100 |
| 10 | 25 | 0.32 | 1.90 | -0.07 | 100 | 80 |
| 11 | 30 | 0.40 | 1.27 | -0.12 | 100 | 100 |
| 12 | 30 | 0.39 | 1.49 | -0.11 | 100 | 112 |
| 13 | 25 | 0.41 | 1.71 | -0.09 | 100 | 100 |
| 14 | 30 | 0.41 | 1.98 | -0.07 | 100 | 100 |
| 15 | 30 | 0.62 | 1.32 | -0.13 | 28 | 88 |
| 16 | 25 | 0.62 | 1.43 | -0.12 | 30 | 65 |
| 17 | 25 | 0.62 | 1.63 | -0.11 | 47 | 88 |
| 18 | 22 | 0.62 | 1.98 | -0.10 | 66 | 88 |
| 19 | 50 | 0.45 | 0.58 | -0.29 | 11 | 50 |
| 20 | 40 | 0.40 | 0.92 | -0.20 | 73 | 100 |

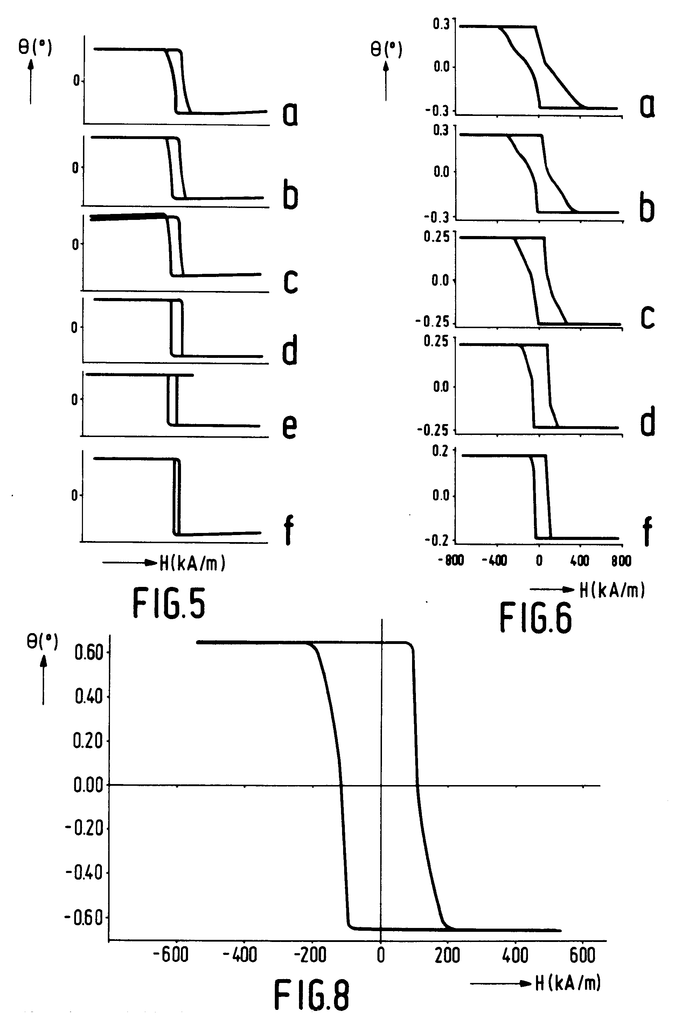

e Fig. 5 shows the magneto-optical hysteresis loops measured at a wavelength $\lambda$ of 530 nm of a number of recording elements having recording layers in the form of multi-layers, the thickness of the Co-layers being 0.4 nm, and the thickness of the Pt-layers being 1.8 nm. The overall thickness of the recording layer is varied with values decreasing from 55 nm (curve a), 44 nm (curve b), 33 nm (curve c), 20 nm (curve d), 11 nm (curve e) to 6.6 nm (curve f). This Figure shows that the best hysteresis loops are obtained if the thickness of the overall multi-layer is less than approximately 40 nm.

f Fig. 6 shows the magneto-optical hysteresis loops measured at a wavelength of 530 nm of a number of recording layers in the form of multi-layers, the thickness of the Co-layers being 0.4 nm, and the thickness of the Pt-layers being 0.9 nm. The thickness of the total recording layer is varied by values decreasing from 52 nm (curve a), 40.3 nm (curve b), 30 nm (curve c), 20 nm (curve d) to 10 nm (curve e). This Figure shows that the remanence in a percentage figure of the multi-layer is optimal if the overall thickness of these layers is less than approximately 40 nm. From measurements at the multi-layers illustrated in Figs. 5 and 6 it is also derived that the overall thickness of the layers must preferably be greater than 10 nm. At a smaller thickness the coercive force of the layers was found to decrease very rapidly.

g Fig. 7 shows the polar Kerr rotation of a recording layer (a) described in the preceding paragraph and of a recording layer of a comparable thickness on the basis of the known GdTbFe-material (b) as a function of the wavelength. The Kerr rotation of the recording material used in accordance with the invention is significantly greater at shorter wavelengths than the rotation of the prior-art material.

4. Signal/noise ratio measurements at thermomagnetically written domains.

In a further embodiment a glass substrate was provided with a 70 nm thick dielectric layer of AlN, onto which thereafter a 18 nm thick recording layer was deposited, which was formed from 0.4 nm thick Co-layers and 1.8 nm thick Pt-layers. The multi-layer was coated with a 90 nm thick dielectric AlN layer on which a 30 nm thick reflection layer of Al was applied. In a number of thermomagnetical recording experiments (v = 1.4 m/s; bandwidth 10 kHz f = 750 kHz; $t_p$ = 300 ns, $P_{write}$ = 6 mW, $H_{write}$ = 28 kAm) domains (bits) were stored in this recording element. Visual observation through a polarization microscope proved that the stored domains

(size approximately $1\mu^2$) were of a substantially perfect shape. The signal-to-noise ratio measured in these experiments was 42.4 dB. The disk noise was better than 15 dB. The write noise was so low that it could not be measured. From further experiments it had been derived that with an optimum composition of the recording layer a signal/noise ratio of 65 dB can be realised.

5. Signal/noise ratio measurements at thermomagnetically written domains.

In another embodiment a glass substrate with a 2-P lacquer was provided with a 80 nm thick dielectric layer of AlN, onto which thereafter a 23 nm thick recording layer was deposited, by means of e-beam evaporation, which layer was formed from 0.4 nm thick Co-layers and 0.9 nm thick Pt-layers. The first and the last layer of the multilayer consisted of Pt, so that all the Co-layers were sandwiched between Pt-layers. Contrary to example 4, no dielectric and reflection layer were deposited on the recording layer.

Figure 8 shows the Kerr-hysteresis loop of the multilayer as measured through the glass substrate at a wavelength of 820 nm. The $H_c$-value was 112 kA/m. In a number of thermomagnetical recording experiments ($v = 5$ m/s; bandwidth 30 kHz; $f = 1$ MHz; $t_p = 400$ ns, $P_{write} = 8$ mW, $H_{write} = 48$ kA/m) domains (bits) were stored in this recording element. Visual observation through a polarisation microscope proved that the stored domains (size approximately $1\mu^2$) were of a substantially perfect shape. The signal-to-noise ratio measured in these experiments was 53.0 dB. The disc noise was better than 9.3 dB. The write noise was 0.6 dB.

6. Signal/noise ratio measurement at thermomagnetically written domains.

In another embodiment a glass substrate with a 2-P lacquer was provided with a 80 nm thick dielectric layer of AlN, onto which thereafter a 23 nm thick recording layer was deposited by means of e-beam evaporation, which layer was formed from 0.4 nm thick Co-layers and 0.9 thick Pd-(paladium)layers.

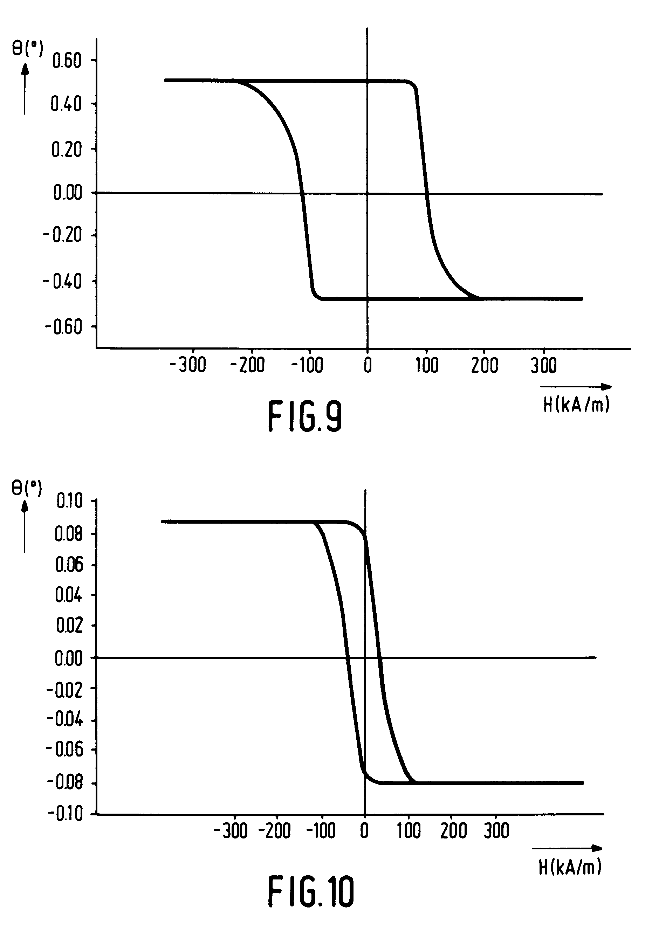

Figure 9 shows the Kerr-hysteresis loop of the multilayer as measured through the glass substrate at a wavelength of 820 nm. The $H_c$-value is 107 kA/m. In a number of thermomagnetical recording experiments ($v = 5$ m/s; bandwidth 30 kHz; $f = 1$ MHz; $t_p = 400$ ns; $P_{write} = 9.2$ mW; $H_{write} = 40$ kA/m) domains (bits) were stored in this recording element. The signal-to-noises ratio was better than 50.5 dB. The disc noise was better than 8.7 dB. The write noise was 1.0 dB.

7. Measurements on another magneto-optical recording element.

In another embodiment a glass substrate was provided with a 64.4 nm thick recording layer by means of e-beam evaporation, which layer was formed from 0.5 nm thick Co-layers and 2.3 nm thick Au-layers.

Figure 10 shows the Kerr-hysteresis loop of the multilayer as measured through the glass substrate at a wavelength of 530 nm. The $H_c$-value is 38.4 kA/m and the remanence amounts 94%.

III. Short description of the drawing.

The drawing comprises 10 Figures, wherein

Fig. 1 is a tangential cross-sectional view of a magneto-optical recording element according to the invention,

Fig. 1A is a cross-sectional view taken on the line A-B of Fig. 1 of a magneto-optical element according to the invention,

Fig. 1B is a cross-sectional view of the recording element of Fig. 1 and 1A, with reference to which the recording process is described,

Fig. 2 is a schematic view of a recording arrangement in which the method according to the invention can be used,

Fig. 3 shows the magneto-optical hysteresis loops of a number of recording layers in the form of a Co/Pt multi-layer,

Fig. 4 shows the polar Kerr rotation as a function of the magnetic field applied of a number of recording layers in the form of a Co/Pt multi-layer,

Fig. 5 shows the polar Kerr rotation as a function of the magnetic field applied of a number of recording layers of varying thicknesses in the form of a Co/Pt multi-layer,

Fig. 6 shows the polar Kerr rotation as a function of the magnetic field applied of a number of further recording layers of varying thicknesses in the form of a Co/Pt multi-layer,

Fig. 7 shows the polar Kerr rotation as a function of the wavelength of a recording layer in a recording element according to the invention and a recording layer on the basis of GdTbFe in a prior-art recording element,

Fig. 8 shows the polar Kerr rotation as a function of the magnetic field applied of a registration element comprising a Co/Pt-multilayer.

Fig. 9 shows the polar Kerr rotation as a funtion of the magnetic field applied of a registration element comprising a Co/Pd-multilayer.

Fig. 10 shows the polar Kerr rotation as a function of the magnetic field applied of a registration element comprising a Co/Au-multilayer.

## Claims

### Claims for the following Contracting States : DE, FR, GB, NL

1. A recording element comprising a substrate (1) and a recording layer (7) in the form of a multi-layer provided thereon, the side of the substrate facing the recording layer being provided with an optically scannable guide track (3), which multilayer comprises a plurality of magnetic, predominantly Co-containing layers (7a) of a thickness of not more than 1.2 nm per layer, and also a plurality of non-magnetic layers (7b) each including at least one transition element and each having a thickness of not more than 2.4 nm, wherein the magnetic and non-magnetic layers have been applied alternately and the overall thickness of the multi-layer is not more than 75 nm, the multi-layer in addition having an easy axis of magnetization which is perpendicular to the substrate surface.

2. A recording element as claimed in Claim 1, wherein the non-magnetic layers (7b) are predominantly made of Pt.

3. A recording element as claimed in Claim 1, wherein the non-magnetic layers (7b) are predominantly made of Pd.

4. A recording element as claimed in Claim 1, wherein the non-magnetic layers (7b) are predominantly made of Au.

5. A recording element as claimed in Claim 1, 2, 3 or 4, wherein the Co-containing magnetic layers (7a) have a maximum thickness of 0.6 nm.

6. A recording element as claimed in Claim 1, 2, 3, 4 or 5, wherein the overall thickness of the multi-layer (7) is not more than 40 nm.

7. A recording element as claimed in any one of the preceding Claims, wherein the magnetic layers (7a) have a total thickness M and the non-magnetic layers (7b) have a total thickness N which are defined by the relation: $1 < N/M < 5$.

8. A recording element as claimed in Claims 1, 2, 3 and 5, wherein the thickness of the individual Co-containing layers (7a) is 0.3-0.5 nm and the thickness of the individual Pt- or Pd-containing layers (7b) is 0.8-1.2 nm.

9. A recording element as claimed in any one of the preceding Claims, wherein the optically scannable guide track (3) is present in a synthetic resin layer (2) provided on the substrate (1).

10. A recording element as claimed in any one of the preceding Claims, wherein a dielectric layer (6) is situated between the recording layer (7) and the substrate (1).

11. A recording element as claimed in any one of the preceding Claims, wherein a reflection layer (7c) is present at the side of the recording layer (7) remote from the substrate (1).

12. A recording element as claimed in Claim 11, wherein a dielectric layer is provided between the recording layer and the reflection layer.

13. A recording element as claimed in Claims 1-10, wherein the recording element includes at least two recording layers each of which is formed by a multi-layer and which are magnetically non-coupled, wherein the recording layers are separated from each other by a spacer layer, and wherein the thickness of at least one of the recording layers is less than 40 nm.

14. A recording element as claimed in Claim 13, wherein the spacer layer contains an organic polymer.

15. A recording element as claimed in Claim 14, wherein the spacer layer consists of a photopolymerized lacquer.

16. A recording element as claimed in Claims 1-12, wherein the recording layer consisting of a multi-layer is composed from a write sector and a parallel extending read sector each having a plurality of magnetic and non-magnetic layers, wherein the thickness (M) of the individual magnetic layers and the thickness (N) of the individual non-magnetic layers have been chosen such that it holds that: (N/M) read sector < (N/M) write sector.

17. A recording element as claimed in Claim 16, wherein the overall thickness of the read sector and the overall thickness of the write sector are in a ratio of 1 : 3.

18. A recording element as claimed in Claim 16 or 17, wherein it holds that (N/M) read sector = 3/2 and that (N/M) write sector = 9/4.

19. A recording element as claimed in Claims 16, 17 or 18 wherein it holds that the non-magnetic layers of the read sector contain Pt and the non-magnetic layers of the write sector contain essentially Pd.

20. A method of manufacturing a recording element according to one of the Claims 1-19, characterized in that the recording multi-layer is applied by means of e-beam evaporation.

**Claims for the following Contracting States : AT, BE, CH, ES, IT, LI, LU, SE**

1. A recording element comprising a substrate (1) and a recording layer (7) in the form of a multi-layer provided thereon, which multi-layer comprises a plurality of magnetic, predominantly Co-containing layers (7a) of a thickness of not more than 1.2 nm per layer, and also a plurality of non-magnetic layers (7b) each including at least one transition element and each having a thickness of not more than 2.4 nm, wherein the magnetic and non-magnetic layers have been applied alternately and the overall thickness of the multi-layer is not more than 75 nm, the multi-layer in addition having an easy axis of magnetization which is perpendicular to the substrate surface.

2. A recording element as claimed in Claim 1, wherein the non-magnetic layers (7b) are predominantly made of Pt.

3. A recording element as claimed in Claim 1, wherein the non-magnetic layers (7b) are predominantly made of Pd.

4. A recording element as claimed in Claim 1, wherein the non-magnetic layers (7b) are predominantly made of Au.

5. A recording element as claimed in Claim 1, 2, 3 or 4, wherein the Co-containing magnetic layers (7a) have a maximum thickness of 0.6 nm.

6. A recording element as claimed in Claim 1, 2, 3, 4 or 5, wherein the overall thickness of the multi-layer (7) is not more than 40 nm.

7. A recording element as claimed in any one of the preceding Claims, wherein the magnetic layers (7a) have a total thickness M and the non-magnetic layers (7b) have a total thickness N which are defined by the relation: $1 < N/M < 5$.

8. A recording element as claimed in Claims 1, 2, 3 and 5, wherein the thickness of the individual Co-containing layers (7a) is 0.3-0.5 nm and the thickness of the individual Pt- or Pd-containing layers (7b) is 0.8-1.2 nm.

9. A recording element as claimed in any one of the preceding Claims, wherein the side of the substrate (1) facing the recording layer (7) is provided with an optically scannable guide track (3).

10. A recording element as claimed in any one of the preceding Claims, wherein a dielectric layer (6) is situated between the recording layer (7) and the substrate (1).

11. A recording element as claimed in any one of the preceding Claims, wherein a reflection layer (7c) is present at the side of the recording layer (7) remote from the substrate (1).

12. A recording element as claimed in Claim 11, wherein a dielectric layer is provided between the recording layer and the reflection layer.

13. A recording element as claimed in Claims 1-10, wherein the recording element includes at least two recording layers each of which is formed by a multi-layer and which are magnetically non-coupled, wherein the recording layers are separated from each other by a spacer layer, and wherein the thickness of at least one of the recording layers is less than 40 nm.

14. A recording element as claimed in Claim 13, wherein the spacer layer contains an organic polymer.

15. A recording element as claimed in Claim 14, wherein the spacer layer consists of a photopolymerized lacquer.

16. A recording element as claimed in Claims 1-12, wherein the recording layer consisting of a multi-layer is composed from a write sector and a parallel extending read sector each having a plurality of magnetic and non-magnetic layers, wherein the thickness (M) of the individual magnetic layers and the thickness (N) of the individual non-magnetic layers have been chosen such that it holds that: (N/M) read sector < (N/M) write sector.

17. A recording element as claimed in Claim 16, wherein the overall thickness of the read sector and the overall thickness of the write sector are in a ratio of 1 : 3.

18. A recording element as claimed in Claim 16 or 17, wherein it holds that (N/M) read sector = 3/2 and that (N/M) write sector = 9/4.

19. A recording element as claimed in Claims 16, 17 or 18 wherein it holds that the non-magnetic layers of the read sector contain Pt and the non-magnetic layers of the write sector contain essentially Pd.

20. A method of manufacturing a recording element according to one of the Claims 1-19, characterized in that the recording multi-layer is applied by means of e-beam evaporation.


**Patentansprüche**

**Patentansprüche für folgende Vertragsstaaten : DE, FR, GB, NL**

1. Aufzeichnungselement mit einem Träger (1) und einer Aufzeichungsschicht (7) in Form einer darauf angebrachten Mehrfachschicht, wobei die Seite des Trägers, die der Aufzeichnungsschicht zugewandt ist, mit einer optisch abtastbaren Führungsspur (3) versehen ist, wobei diese Mehrfachschicht eine Anzahl magnetischer, vorwiegend Co-haltiger Schichten (7a) einer Stärke von nicht mehr als 1,2 nm je Schicht aufweist, ebenso wie eine Anzahl nichtmagnetischer Schichten (7b), die je wenigstens ein Übergangselement aufweisen und je eine Stärke haben von weniger als 2,4 nm, wobei die magnetischen und nichtmagnetischen Schichten abwechselnd angebracht sind und die Gesamtstärke der Mehrfachschicht nicht größer ist als 75 nm, wobei die Mehrfachschicht außerdem eine einfache Magnetisierungsachse hat, die senkrecht auf der Trägerfläche steht.

2. Aufzeichnungselement nach Anspruch 1, wobei die nichtmagnetischen Schichten (7b) vorwiegend aus Pt bestehen.

3. Aufzeichnungselement nach Anspruch 1, wobei die nichtmagnetischen Schichten (7b) vorwiegend aus Pd bestehen.

4. Aufzeichnungselement nach Anspruch 1, wobei die nichtmagnetischen Schichten (7b) vorwiegend aus Au bestehen.

5. Aufzeichnungselement nach Anspruch 1, 2, 3 oder 4, wobei die Cohaltigen magnetischen Schichten (7a) eine Maximalstärke von 0,6 nm haben.

6. Aufzeichnungselement nach Anspruch 1, 2, 3, 4 oder 5, wobei die Gesamtstärke der Mehrfachschicht (7) nicht mehr als 40 nm beträgt.

7. Aufzeichnungselement nach einem der vorstehenden Ansprüche, wobei die magnetischen Schichten (7a) eine Gesamtstärke M und die nichtmagnetischen Schichten (7b) eine Gesamtstärke N aufweisen, die durch die Beziehung: 1 < N/M < 5 definiert wird.

8. Aufzeichnungselement nach Anspruch 1, 2, 3 und 5, wobei die Stärke der einzelnen Co-haltigen Schichten (7a) 0,3 - 0,5 nm und die Stärke der einzelnen Pt- oder Pd-haltigen Schichten (7b) 0,8 - 1,2 nm beträgt.

9. Aufzeichnungselement nach einem der vorstehenden Ansprüche, wobei die optisch abtastbare Führungsspur (3) in der Kunststoffschicht (2) auf dem Träger (1) vorgesehen ist.

10. Aufzeichnungselement nach einem der vorstehenden Ansprüche, wobei eine dielektrische Schicht (6) zwischen der Aufzeichnungsschicht (7) und dem Träger (1) liegt.

11. Aufzeichnungselement nach einem der vorstehenden Ansprüche, wobei eine Reflexionsschicht (7c) an derjenigen Seite der Aufzeichnungsschicht (7) vorhanden ist, die von dem Träger (1) abgewandt ist.

12. Aufzeichnungselement nach Anspruch 11, wobei eine dielektrische Schicht zwischen der Aufzeichnungsschicht und der Reflexionsschicht vorgesehen ist.

13. Aufzeichnungselementnach Anspruch 1 - 10, wobei das Aufzeichnungselement wenigstens zwei Aufzeichnungsschichten aufweist, die je durch eine Mehrfachschicht gebildet sind und die magnetisch nicht gekoppelt sind, wobei die Aufzeichnungsschichten durch eine Trennschicht voneinander getrennt sind und wobei die Stärke wenigstens einer der Aufzeichnungsschichten weniger als 40 nm beträgt.

14. Aufzeichnungselement nach Anspruch 13, wobei die Trennschicht ein organisches Polymewr aufweist.

15. Aufzeichnungselement nach Anspruch 14, wobei die Trennschicht aus einem photopolymerisierten Lack besteht.

16. Aufzeichnungselement nach Anspruch 1 - 12, wobei die Aufzeichnungsschicht, die aus einer Mehrfachschicht besteht, aus einem Schreibsektor und einem sich parallel dazu erstreckenden Lesesektor besteht, die je eine Anzahl magnetischer und nichtmagnetischer Schichten aufweisen, wobei die Stärke (M) der einzelnen magnetischen Schichten und die Stärke (N) der einzelnen nichtmagnetischen Schichten derart gewählt worden ist, daß folgendes gilt: (N/M) Lesesektor < (NM) Schreibsektor.

17. Aufzeichnungselement nach Anspruch 16, wobei die Gesamtstärke des Lesesektors und die Gesamtstärke des Schreibsektors in einem Verhältnis von 1 : 3 sind.

18. Aufzeichnungselement nach Anspruch 16 oder 17, wobei folgendes gilt: (N/M) Lesesektor = 3/2 und (N/M) Schreibsektor = 9/4.

19. Aufzeichnungselementnach Anspruch 16, 17 oder 18, wobei gilt, daß die nichtmagnetischen Schichten des Lesesektors Pt aufweisen und die nichtmagnetischen Schichten des Schreibsektors vorwiegend Pd aufweisen.

20. Verfahren zum Herstellen eines Aufzeichnungselementes nach einem der Ansprüche 1 - 19, dadurch gekennzeichnet, daß die Aufzeichnungsmehrfachschicht in einem Elektronenstrahlverdampfungsverfahren angebracht wird.

**Patentansprüche für folgende Vertragsstaaten : AT, BE, CH, ES, IT, LI, LU, SE**

1. Aufzeichnungselement mit einem Träger (1) und einer Aufzeichnungsschicht (7) in Form einer darauf angebrachten Mehrfachschicht, die eine Anzahl magnetischer, vorwiegend Co-haltiger Schichten (7a) einer Stärke von nicht mehr als 1,2 nm je Schicht aufweist, ebenso wie eine Anzahl nichtmagnetischer Schichten (7b), die je wenigstens ein Übergangselement aufweisen und je eine Stärke haben von weniger als 2,4 nm, wobei die magnetischen und nichtmagnetischen Schichten abwechselnd angebracht sind und die Gesamtstärke der Mehrfachschicht nicht größer ist als 75 nm, wobei die Mehrfachschicht außerdem eine einfache Magnetisierungsachse hat, die senkrecht auf der Trägerfläche steht.

2. Aufzeichnungselement nach Anspruch 1, wobei die nichtmagnetischen Schichten (7b) vorwiegend aus Pt bestehen.

3. Aufzeichnungselement nach Anspruch 1, wobei die nichtmagnetischen Schichten (7b) vorwiegend aus Pd bestehen.

4. Aufzeichnungselement nach Anspruch 1, wobei die nichtmagnetischen Schichten (7b) vorwiegend aus Au bestehen.

5. Aufzeichnungselement nach Anspruch 1, 2, 3 oder 4, wobei die Cohaltigen magnetischen Schichten (7a) eine Maximalstärke von 0,6 nm haben.

6. Aufzeichnungselement nach Anspruch 1, 2, 3, 4 oder 5, wobei die Gesamtstärke der Mehrfachschicht (7) nicht mehr als 40 nm beträgt.

7. Aufzeichnungselement nach einem der vorstehenden Ansprüche, wobei die magnetischen Schichten (7a) eine Gesamtstärke M und die nichtmagnetischen Schichten (7b) eine Gesamtstärke N aufweisen, die durch die Beziehung: $1 < N/M < 5$ definiert wird.

8. Aufzeichnungselement nach Anspruch 1, 2, 3 und 5, wobei die Stärke der einzelnen Co-haltigen Schichten (7a) 0,3 - 0,5 nm und die Stärke der einzelnen Pt- oder Pd-haltigen Schichten (7b) 0,8 - 1,2 nm beträgt.

9. Aufzeichnungselement nach einem der vorstehenden Ansprüche, wobei die Seite des Trägers (1), die der Aufzeichungsschicht (7) zugewandt ist, mit einer optisch abtastbaren Führungsspur (3) versehen ist.

10. Aufzeichnungselement nach einem der vorstehenden Ansprüche, wobei eine dielektrische Schicht (6) zwischen der Aufzeichnungsschicht (7) und dem Träger (1) liegt.

11. Aufzeichnungselement nach einem der vorstehenden Ansprüche, wobei eine Reflexionsschicht (7c) an derjenigen Seite der Aufzeichnungsschicht (7) vorhanden ist, die von dem Träger (1) abgewandt ist.

12. Aufzeichnungselement nach Anspruch 11, wobei eine dielektrische Schicht zwischen der Aufzeichnungsschicht und der Reflexionsschicht vorgesehen ist.

13. Aufzeichnungselement nach Anspruch 1 - 10, wobei das Aufzeichnungselement wenigstens zwei Aufzeichnungsschichten aufweist, die je durch eine Mehrfachschicht gebildet sind und die magnetisch nicht gekoppelt sind, wobei die Aufzeichnungsschichten durch eine Trennschicht voneinander getrennt sind und wobei die Stärke wenigstens einer der Aufzeichnungsschichten weniger als 40 nm beträgt.

14. Aufzeichnungselement nach Anspruch 13, wobei die Trennschicht ein organisches Polymewr aufweist.

15. Aufzeichnungselement nach Anspruch 14, wobei die Trennschicht aus einem photopolymerisierten Lack besteht.

16. Aufzeichnungselement nach Anspruch 1 - 12, wobei die Aufzeichnungsschicht, die aus einer Mehrfachschicht besteht, aus einem Schreibsektor und einem sich parallel dazu erstreckenden Lesesektor besteht, die je eine Anzahl magnetischer und nichtmagnetischer Schichten aufweisen, wobei die Stärke (M) der einzelnen magnetischen Schichten und die Stärke (N) der einzelnen nichtmagnetischen Schichten derart gewählt worden ist, daß folgendes gilt: (N/M) Lesesektor < (NM) Schreibsektor.

17. Aufzeichnungselement nach Anspruch 16, wobei die Gesamtstärke des Lesesektors und die Gesamtstärke des Schreibsektors in einem Verhältnis von 1 : 3 sind.

18. Aufzeichnungselement nach Anspruch 16 oder 17, wobei folgendes gilt: (N/M) Lesesektor = 3/2 und (N/M) Schreibsektor = 9/4.

**19.** Aufzeichnungselementnach Anspruch 16, 17 oder 18, wobei gilt, daß die nichtmagnetischen Schichten des Lesesektors Pt aufweisen und die nichtmagnetischen Schichten des Schreibsektors vorwiegend Pd aufweisen.

**20.** Verfahren zum Herstellen eines Aufzeichnungselementes nach einem der Ansprüche 1 - 19, <u>dadurch gekennzeichnet</u>, daß die Aufzeichnungsmehrfachschicht in einem Elektronenstrahlverdampfungsverfahren angebracht wird.

**Revendications**

**Revendications pour les Etats contractants suivants : DE, FR, GB, NL**

**1.** Elément d'enregistrement comportant un substrat (1) et une couche d'enregistrement (7) en forme d'une couche multiple déposée sur ledit substrat, la face du substrat située vis-à-vis de la couche d'enregistrement étant munie d'une piste de guidage (3) optiquement explorable, ladite couche multiple comportant une pluralité de couches magnétiques (7a) contenant d'une manière prédominante du Co dont l'épaisseur n'est pas supérieure à 1,2 nm par couche, ainsi qu'une pluralité de couches non magnétiques (7b) chacune incorporant au moins un élément de transition et chacune présentant une épaisseur qui n'est pas supérieure à 2,4 nm, les couches magnétiques déposées alternant avec les couches non magnétiques déposées et l'épaisseur totale de la couche multiple n'étant pas supérieure à 75 nm, en outre la couche multiple présentant un axe aisé de magnétisation qui est perpendiculaire à la surface de substrat.

**2.** Elément d'enregistrement selon la revendication 1, dans lequel les couches non magnétiques (7b) sont réalisées d'une manière prédominante en Pt.

**3.** Elément d'enregistrement selon la revendication 1, dans lequel les couches non magnétiques (7b) sont réalisées d'une manière prédominante en Pd.

**4.** Elément d'enregistrement selon la revendication 1, dans lequel les couches non magnétiques (7b) sont réalisées d'une manière prédominante en Au.

**5.** Elément d'enregistrement selon la revendication 1, 2, 3 ou 4, dans lequel les couches magnétiques (7a) contenant du Co présentent une épaisseur maximale de 0,6 nm.

**6.** Elément d'enregistrement selon la revendication 1, 2, 3, 4 ou 5, dans lequel l'épaisseur totale de la couche multiple (7) n'est pas supérieure à 40 nm.

**7.** Elément d'enregistrement selon l'une quelconque des revendications précédentes, dans lequel l'épaisseur totale des couches magnétiques (7a) est égale à M et dans lequel l'épaisseur totale des couches non magnétiques (7b) est égale à N, les couches étant définies par la relation $1 < N/M < 5$.

**8.** Elément d'enregistrement selon la revendication 1, 2, 3, et 5, dans lequel l'épaisseur des couches individuelles (7a) contenant du Co est comprise entre 0,3 et 0,5 nm et dans lequel l'épaisseur des couches individuelles (7b) contenant du Pt ou du Pd est comprise entre 0,8 et 1,2 nm.

**9.** Elément d'enregistrement selon l'une quelconque des revendications précédentes, dans lequel la piste de guidage optiquement explorable (3) est présente dans une couche en résine synthétique (2) prévue sur le substrat (1).

**10.** Elément d'enregistrement selon l'une quelconque des revendications précédentes, dans lequel une couche diélectrique (6) est située entre la couche d'enregistrement (7) et le substrat (1).

**11.** Elément d'enregistrement selon l'une quelconque des revendications précédentes, dans lequel une couche réfléchissante (7c) est présente sur la face de la couche d'enregistrement (7) située à l'opposé du substrat (1).

**12.** Elément d'enregistrement selon la revendication 11, dans lequel une couche diélectrique est prévue entre la couche d'enregistrement et la couche réfléchissante.

13. Elément d'enregistrement selon les revendications 1 à 10, dans lequel l'élément d'enregistrement contient au moins deux couches d'enregistrement, chacune constituée d'une couche multiple, lesdites couches d'enregistrement n'étant pas couplées magnétiquement, dans lequel les couches d'enregistrement sont mutuellement séparées par une couche de séparation et dans lequel l'épaisseur d'au moins l'une des couches d'enregistrement est inférieure à 40 nm.

14. Elément d'enregistrement selon la revendication 13, dans lequel la couche de séparation contient un polymère organique.

15. Elément d'enregistrement selon la revendication 14, dans lequel la couche de séparation contient une laque photopolymérisée.

16. Elément d'enregistrement selon les revendications 1 à 12, dans lequel la couche d'enregistrement comportant une couche multiple est constituée d'un secteur d'enregistrement et d'un secteur de lecture s'étendant parallèlement, chaque secteur présentant une pluralité de couches magnétiques et de couches non magnétiques, dans lequel l'épaisseur (M) des couches magnétiques individuelles et l'épaisseur (N) des couches non magnétiques individuelles ont été choisies de manière que l'on a :( N/M) du secteur de lecture < (N/M) du secteur d'enregistrement.

17. Elément d'enregistrement selon la revendication 16, dans lequel l'épaisseur totale du secteur de lecture et l'épaisseur totale du secteur d'enregistrement présentent un rapport de 1:3.

18. Elément d'enregistrement selon la revendication 16 ou 17, dans lequel on a que (N/M) du secteur de lecture = 3/2 et que (N/M) du secteur d'enregistrement = 9/4.

19. Elément d'enregistrement selon la revendication 16, 17 ou 18, dans lequel on a que les couches non magnétiques du secteur de lecture contiennent du Pt et que les couches non magnétiques du secteur d'enregistrement contiennent essentiellement du Pd.

20. Procédé de fabrication d'un élément d'enregistrement selon l'une quelconque des revendications 1 à 19, caractérisé en ce que la couche d'enregistrement multiple est déposée au moyen d'une évaporation à faisceau électronique.

**Revendications pour les Etats contractants suivants : AT, BE, CH, ES, IT, LI, LU, SE**

1. Elément d'enregistrement comportant un substrat (1) et une couche d'enregistrement (7) en forme d'une couche multiple déposée sur ledit substrat, ladite couche multiple comportant une pluralité de couches magnétiques (7a) contenant d'une manière prédominante du Co dont l'épaisseur n'est pas supérieure à 1,2 nm par couche, ainsi qu'une pluralité de couches non magnétiques (7b) chacune incorporant au moins un élément de transition et chacune présentant une épaisseur qui n'est pas supérieure à 2,4 nm, les couches magnétiques déposées alternant avec les couches non magnétiques déposées et l'épaisseur totale de la couche multiple n'étant pas supérieure à 75 nm, en outre la couche multiple présentant un axe aisé de magnétisation qui est perpendiculaire à la surface de substrat.

2. Elément d'enregistrement selon la revendication 1, dans lequel les couches non magnétiques (7b) sont réalisées d'une manière prédominante en Pt.

3. Elément d'enregistrement selon la revendication 1, dans lequel les couches non magnétiques (7b) sont réalisées d'une manière prédominante en Pd.

4. Elément d'enregistrement selon la revendication 1, dans lequel les couches non magnétiques (7b) sont réalisées d'une manière prédominante en Au.

5. Elément d'enregistrement selon la revendication 1, 2, 3 ou 4, dans lequel les couches magnétiques (7a) contenant du Co présentent une épaisseur maximale de 0,6 nm.

6. Elément d'enregistrement selon la revendication 1, 2, 3, 4 ou 5, dans lequel l'épaisseur totale de la couche multiple (7) n'est pas supérieure à 40 nm.

7. Elément d'enregistrement selon l'une quelconque des revendications précédentes, dans lequel l'épaisseur totale des couches magnétiques (7a) est égale à M et dans lequel l'épaisseur totale des couches non magnétiques (7b) est égale à N, les couches étant définies par la relation 1 < N/M <5.

**8.** Elément d'enregistrement selon la revendication 1, 2, 3, et 5, dans lequel l'épaisseur des couches individuelles (7a) contenant du Co est comprise entre 0,3 et 0,5 nm et dans lequel l'épaisseur des couches individuelles (7b) contenant du Pt ou du Pd est comprise entre 0,8 et 1,2 nm.

**9.** Elément d'enregistrement selon l'une quelconque des revendications précédentes, dans lequel la face du substrat (I) située vis-à-vis la couche d'enregistrement (7) est munie d'une piste de guidage optiquement explorable (3).

**10.** Elément d'enregistrement selon l'une quelconque des revendications précédentes, dans lequel une couche diélectrique (6) est située entre la couche d'enregistrement (7) et le substrat (1).

**11.** Elément d'enregistrement selon l'une quelconque des revendications précédentes, dans lequel une couche réfléchissante (7c) est présente sur la face de la couche d'enregistrement (7) située à l'opposé du substrat (1).

**12.** Elément d'enregistrement selon la revendication 11, dans lequel une couche diélectrique est prévue entre la couche d'enregistrement et la couche réfléchissante.

**13.** Elément d'enregistrement selon les revendications 1 à 10, dans lequel l'élément d'enregistrement contient au moins deux couches d'enregistrement, chacune constituée d'une couche multiple, lesdites couches d'enregistrement n'étant pas couplées magnétiquement, dans lequel les couches d'enregistrement sont mutuellement séparées par une couche de séparation et dans lequel l'épaisseur d'au moins l'une des couches d'enregistrement est inférieure à 40 nm.

**14.** Elément d'enregistrement selon la revendication 13, dans lequel la couche de séparation contient un polymère organique.

**15.** Elément d'enregistrement selon la revendication 14, dans lequel la couche de séparation contient une laque photopolymérisée.

**16.** Elément d'enregistrement selon les revendications 1 à 12, dans lequel la couche d'enregistrement comportant une couche multiple est constituée d'un secteur d'enregistrement et d'un secteur de lecture s'étendant parallèlement, chaque secteur présentant une pluralité de couches magnétiques et de couches non magnétiques, dans lequel l'épaisseur (M) des couches magnétiques individuelles et l'épaisseur (N) des couches non magnétiques individuelles ont été choisies de manière que l'on a :( N/M) du secteur de lecture < (N/M) du secteur d'enregistrement.

**17.** Elément d'enregistrement selon la revendication 16, dans lequel l'épaisseur totale du secteur de lecture et l'épaisseur totale du secteur d'enregistrement présentent un rapport de 1:3.

**18.** Elément d'enregistrement selon la revendication 16 ou 17, dans lequel on a que (N/M) du secteur de lecture = 3/2 et que (N/M) du secteur d'enregistrement = 9/4.

**19.** Elément d'enregistrement selon la revendication 16, 17 ou 18, dans lequel on a que les couches non magnétiques du secteur de lecture contiennent du Pt et que les couches non magnétiques du secteur d'enregistrement contiennent essentiellement du Pd.

**20.** Procédé de fabrication d'un élément d'enregistrement selon l'une quelconque des revendications 1 à 19, caractérisé en ce que la couche d'enregistrement multiple est déposée au moyen d'une évaporation à faisceau électronique.

FIG.1

FIG.1A

FIG.1B

EP 0 376 375 B1

FIG. 2

FIG. 3

21

FIG.4

FIG.7

FIG.5

FIG.6

FIG.8

23

FIG.9

FIG.10